(19) **Europäisches Patentamt / European Patent Office / Office européen des brevets**

(11) **EP 4 298 916 A1**

(12) # EUROPEAN PATENT APPLICATION

(43) Date of publication:
**03.01.2024 Bulletin 2024/01**

(21) Application number: **22181655.6**

(22) Date of filing: **28.06.2022**

(51) International Patent Classification (IPC):
**A23G 1/48** (2006.01)   **A23G 1/54** (2006.01)

(52) Cooperative Patent Classification (CPC):
**A23G 1/40; A23G 1/48; A23G 1/54**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mandrin, Volodymyr**
**1020 Wien (AT)**

(72) Inventor: **Mandrin, Volodymyr**
**1020 Wien (AT)**

(74) Representative: **Schwarz & Partner Patentanwälte GmbH**
**Patentanwälte**
**Wipplingerstraße 30**
**1010 Wien (AT)**

(54) **CHOCOLATE PRODUCT**

(57)   The present invention relates to a storage stable chocolate product comprising chocolate with no added sucrose and pine nuts and/or comminuted pine nuts, wherein the pine nuts and/or comminuted pine nuts have a size of at least 1 mm.

EP 4 298 916 A1

**Description**

TECHNICAL FIELD

The present invention relates to the field of chocolate products.

BACKGROUND ART

Chocolate is consumed all over the globe and is among the most popular food types and flavors. Chocolate is derived from cocoa beans, which are obtained from the fruit of the cocoa tree, *Theobroma cacao* (Linnaeus). Cocoa is one of the most important agricultural export commodities in the world and forms the economic backbone of several nations in America, Africa, and Asia. Chocolate has been combined for a long time with different flavors and with other food ingredients to create new tastes or taste combinations in response to the unlimited variety of consumer inclinations. Many types of chocolate flavors or extracts exist on the market. Examples include chocolate with fruit pieces or extracts, chocolate with patisserie products (e.g., chocolate with cookie pieces), and chocolate filled with fruit jams, mousses, or liquors.

Nuts and chocolate represent a widespread combination in confectionery due to the satisfying crunch of nuts paired with the sweetness of chocolate. Nuts are a classic component of a great variety of chocolate creations, dating back to the early 1910s. Nuts are included in chocolate production either in the form of whole nuts or as a ground ingredient. The chocolate ingredient nougat also contains nuts in ground form. The nuts are ground very finely and finished with the chocolate. Various chocolate-nut combinations have been created and marketed, including hazelnuts, peanuts, walnuts, brazil nuts, pistachios, and/or macadamia nuts with white or dark chocolate. One significant advantage of processing nuts in the various types of chocolate is the sensory characteristics and potential health benefits of nuts. It is reported that nuts are associated with the reduction of the risk of arteriosclerosis in humans due to the presence of bioactive constituents such as tocopherols, phytosterols, folic acid, selenium, and magnesium, which are known to have antioxidant, anti-inflammatory or anticarcinogenic properties.

Also pine nuts are added to chocolate products (see e.g. RU 2198532C2, KR 101178547B1). Pine nuts are edible seeds of certain pine species and harvested for food production even prior to the time of ancient Rome and Greece. They have been the basis of the diet of several Native American tribes in North America and indigenous peoples of Siberia and the Russian Far East. Today pine nut continues to be harvested in many regions of the Northern hemisphere and is marketed on domestic and international markets as a gourmet product. Pine nuts are known throughout the world as a nutritious, healthy snack and an essential ingredient in multiple oriental and Mediterranean dishes. Pine nuts are cholesterol-free and contain between 53 and 68% fat (93% is unsaturated fat), multiple micronutrients, and vitamins.

It turned out that pine nuts or comminuted pine nuts having a certain particle size comprised in chocolate products as well as other sweet products are subject to disintegration and discoloration, resulting in the reduced shelf life of those sweets. In addition, the decrease in the sensory quality of the pine nuts over time is often described as a bitter taste. The decay of pine nuts in sweet products is primarily characterized by a change in color, shape, and texture of the pine nuts, resulting in an unappealing product. For this reason, chocolate products known in the art and comprising pine nuts have a limited shelf life, which makes it difficult for manufacturers and food suppliers to provide such products of sufficient quality to consumers.

It is an object of the present invention to provide chocolate products comprising pine nuts showing superior storage properties.

SUMMARY OF THE INVENTION

Thus, the present invention relates to a storage stable chocolate product comprising chocolate with no added sucrose and pine nuts and/or comminuted pine nuts, wherein the pine nuts and/or comminuted pine nuts have a size of at least 1 mm.

It turned surprisingly out that the presence of sucrose in a product comprising pine nuts and/or comminuted pine nuts having a medium size of at least 1 mm negatively influences its shelf life. Pine nuts being in contact with sucrose are subject to disintegration and discoloration. This effect prevents the production of storage stable chocolate products because pine nuts contacted with sucrose develop an unstable texture and loose their initial natural color, in contrast to pine nuts contacted with products without added sucrose. The presence of the added sucrose makes pine nuts prone to earlier spoilage, thus leading to a limited shelf life. These negative effects cannot only be observed using entire pine nuts but also using comminuted pine nuts. It was found that processed pine nuts having a medium size of less than 1 mm are not significantly affected by the presence of sucrose. This is a surprising finding since the shelf life of sucrose comprising chocolate products containing fragments of pine nuts seems to depend also on the size of the pine nut fragments.

To preserve the product quality of chocolate products comprising pine nuts and/or comminuted pine nuts having a medium size of at least 1 mm and in order to increase the shelf life of such products, the chocolate used to produce these products do not comprise any added sucrose to defer the decay of pine nuts in chocolate.

Another aspect of the present invention relates to a method for manufacturing a chocolate product comprising the step of contacting a heated chocolate, wherein the chocolate comprises no added sucrose, with pine nuts and/or comminuted pine nuts as defined herein.

In order to incorporate pine nuts and/or comminuted pine nuts into the chocolate to preferably form a homogenous chocolate product, the chocolate is heated to a temperature forming a viscous or liquid mass. This chocolate mass can be contacted with pine nuts and/or comminuted pine nuts to form an inventive chocolate product.

DESCRIPTION OF PREFERRED EMBODIMENTS

The term "storage stable", as used herein, means that the pine nuts and/or comminuted pine nuts comprised in the chocolate product retain color, flavor and volume over a time period of more than 4 weeks, preferably more than 3 months, more preferably more than 6 months, more preferably more than 9 months, more preferably more than 12 months, at a storage temperature between 18°C and 22°C at a maximum humidity of 70% in an area free of odors and infestation.

The chocolate and/or chocolate product of the present invention "with no added sucrose", as used herein, means that the chocolate is substantially free of sucrose. "Substantially free of sucrose" and "with no added sucrose," as used herein, means that no sucrose or no substantial amounts of sucrose are added during the manufacturing of the chocolate mass. The term "with no added sucrose" can also be referred to as "without added sucrose", "no added sucrose", "sucrose-free", "without sucrose" and/or "with no sucrose". The term "with no added sucrose" refers in particular to "substantially free of sucrose", meaning that the total mass fraction of the sucrose in the chocolate is less than 2 wt%, preferably less than 1.5 wt%, preferably less than 1 wt%, more preferably less than 0.5 wt%. The total mass fraction of sucrose in these terms is calculated as the mass ratio of the sucrose amount and the total mass of the chocolate. The sucrose content of the chocolate and the chocolate product which is contacted with pine nuts and/or comminuted pine nuts is one of the key factors in the storage stability of the chocolate products of the present invention. As mentioned above, it turned surprisingly out that the substantial abstinence of added sucrose in the chocolate results in a storage stable product. The presence of sucrose naturally occurring in cocoa beans and thus in the chocolate produced therefrom does not affect or influence the storage stability of the inventive chocolate product. Hence, the chocolate used to produce the chocolate product of the present invention comprises just naturally occurring sucrose and no sucrose added during its production process.

The pine nuts and/or comminuted pine nuts of the chocolate product of the present invention may have a size of at least 1 mm. This means that at least about 90%, preferably at least about 95%, more preferably at least about 98%, more preferably at least about 99%, more preferably 100%, of the pine nuts or pine nut fragments ("comminuted pine nuts") have a size of at least 1 mm. Pine nuts and/or comminuted pine nuts having this minimum size are obtained by using, for instance, a sieve having a mesh size of 1 mm.

According to a further preferred embodiment of the present invention, the pine nuts and/or comminuted pine nuts may have a size of at least 1.5 mm, preferably of at least 2 mm, more preferably of at least 2.5 mm, even more preferably of at least 3 mm.

In order to maintain pine nut product quality, the composition of the present invention comprise pine nuts or comminuted pine with a medium size of at least 1 mm. It turned out that the decay of pine nuts and its fragments started at a minimum mean size of 1 mm in a sucrose-containing chocolate product. Therefore, the size of the comprising pine nuts is a significant factor for extended storage live.

The chocolate product of the present invention may comprise pine nuts from different sources. According to a preferred embodiment of the present invention, pine nuts are obtained from one or more pines selected from the group consisting of *Pinus pinea, Pinus koraiensis, Pinus sibirica, Pinus yunnanensis, Pinus wallichiana, Pinus gerardiana and Pinus pumila, Pinus edulis, Pinus armandii, Pinus monophylla, Pinus cembroides, Pinus quadrifolia, Pinus nelsonii, Pinus pinceana, Pinus torreyana, Pinus sabiniana, Pinus coulteri, Pinus lambertiana, Pinus wallichiana, Pinus griffithii, Pinus bungeana, Pinus tabulaeformis,* and *Pinus cembra.*

The maximum pine nut size in the chocolate product may depend on the comminution method and/or on the natural size of the pine nuts from different sources. According to a preferred embodiment of the present invention the pine nuts and/or comminuted pine nuts have a maximum size of not more than 20 mm, preferably not more than 15 mm, even more preferably not more than 10 mm.

According to a further preferred embodiment of the present invention, the chocolate product comprises 5 to 80 wt%, preferably 5 to 70 wt%, more preferably 5 to 60 wt%, more preferably 5 to 50 wt%, pine nuts and/or comminuted pine nuts. It turned out that the taste of pine nuts in chocolate products is very soft, so that it is advantageous to use a total weight ratio of pine nuts or fragments thereof of at least 5 wt% to achieve a satisfactory pine nut flavor. Otherwise, the sensory characteristics of the pine nuts are masked by the taste of other ingredients and are not well perceived by the consumer.

The chocolate product of the present invention may contain entire pine nuts or comminuted pine nuts. According to a preferred embodiment of the present invention, comminuted pine nuts can be crushed, ground, and/or cut. Also, combinations of pine nut fragments processed by more than one of these methods can be used.

To obtain a sweet tasting chocolate product, sugar substitutes such as sugar alcohols can be added to the chocolate product. It turned surprisingly out that the presence of sugar substitutes in the chocolate and consequently in the chocolate product has no negative impact on color, shape, and texture of the pine nuts and/or comminuted pine nuts. Thus, the chocolate used herein comprises preferably at least one sugar substitute, preferably 5 to 60 wt %, more preferably 10 to 50 wt%, of said at least one sugar substitute.

According to a further preferred embodiment of the present invention, the sugar substitute is a sugar alcohol.

Sugar alcohols or "polyols" differ from sugars in that the aldehyde or ketone function of the sugar molecule is reduced to an alcohol. The use of sugar alcohols is particularly preferred since they do not have any negative influence on pine nuts and/or comminuted pine nuts over time and give a sweet taste to the inventive chocolate product. Since sugar alcohols do not influence the quality of pine nuts during the storage, sensory properties are well retained, improving the product's shelf-life. According to a further preferred embodiment of the present invention, the sugar alcohol is selected from the group consisting of maltitol, xylitol, sorbitol, mannitol, arabitol, erythritol, galactitol, hydrogenated starch hydrolysate, isomalt, lactitol, polyglycerol and combinations thereof, whereby the use of maltitol is particularly preferred.

Sugar alcohols like sorbitol, mannitol, and maltitol are commonly used sugar alcohols in food industry and are typically produced by the enzymatic hydrolysis of starch. Sugar alcohols retain sweetness through heating, and their bulking properties are similar to those of sucrose. All sugar alcohols are absorbed slowly and incompletely from the intestine by passive diffusion. Therefore, these sweeteners provide low energy and offer potential health benefits such as reduced glycemic response and reduced dental caries risk.

The chocolate comprised in the chocolate product of the present invention may comprise cocoa butter as basic ingredient being typically present in chocolates known in the art.

According to a preferred embodiment, the chocolate comprises 4 to 50 wt%, preferably 4 to 40 wt%, cocoa butter.

The chocolate comprised in the chocolate product can also comprise cocoa powder. According to a preferred embodiment of the present invention, chocolate comprises 0 to 90 wt%, preferably 0 to 80 wt%, more preferably 0 to 70 wt%, more preferably 0 to 60 wt%, more preferably 0 to 50%, cocoa powder.

Chocolate, in particular white chocolate, may comprise as further component milk powder. According to a further preferred embodiment of the present invention, the chocolate comprises 0 to 15 wt%, preferably 0 to 10 wt%, milk powder.

According to a further preferred embodiment of the present invention, the chocolate product may comprise at least one further ingredient, preferably selected from the group consisting of nuts, preferably cashew nuts, hazel nuts, brazil nuts, macadamia nuts, or walnuts, peanuts, almonds, coconut pieces and combinations thereof. These ingredients can be typically added to the chocolate product in a fragmented form.

The chocolate product of the present invention may have any form. According to a further preferred embodiment of the present invention, the chocolate product can be a praline, a bar, a chocolate drop, or a chocolate figure. Chocolate figures typically can have the shape of Santa Clause or an Easter bunny.

If the chocolate product of the present invention has the form of a praline, the chocolate comprising pine nuts and fragments thereof may be combined with other components typically used in pralines. In order to not contact ingredients comprising sugars, in particular nonreducing sugars like sucrose, with the pine nuts and the fragments thereof, it is advantageous to provide compartments in the pralines of the present invention. According to a further preferred embodiment of the present invention, the praline comprises at least one first compartment and at least one second compartment separated by the chocolate as defined above, wherein at least one first compartment comprises pine nuts and/or comminuted pine nuts as defined above.

Alternatively, the pine nuts and fragments thereof can be coated with chocolate with no added sucrose, forming a protective layer around each pine nut and/or pine nut piece. This coating allows to separate the nuts from other parts of the chocolate product and thus, enabling the addition of sugar-containing preparations to the coated pine nuts without having the effect of early spoilage.

"Sugar containing preparation", as used herein, refers to known sugar containing products comprising at least one saccharide such as jam, fruits, fruit extracts, nougat, brittles, chocolate, caramel, or marzipan. The saccharide is selected from the group consisting of glucose, fructose, lactose, galactose, maltose, dextrose, dextrin, xylose, sucrose, ribose, mannose and combinations thereof.

According to a further preferred embodiment of the present invention, at least one second compartment of the praline comprises a composition comprising at least one sugar-containing preparation.

According to a further preferred embodiment of the present invention, the at least one sugar containing preparation comprises nougat, brittle and/or fruits, preferably jam or fruit puree.

Another aspect of the present invention relates to a method for manufacturing a chocolate product comprising the step of contacting a heated chocolate with pine nuts and/or comminuted pine nuts as defined above. "Heated chocolate", as used herein means, that the chocolate as defined above is tempered to a temperature allowing its processing to the desired form. The preferred temperature of heated chocolate is in a range between 40 and 60°C.

According to a preferred embodiment of the present invention, the method comprises the steps of:

a) providing a hollow chocolate body comprising chocolate being substantially free of sucrose as defined above, said body comprising a base and at least one side wall,
b) partially filling pine nuts and/or comminuted pine nuts as defined above into said hollow body,
c) introducing heated chocolate into the body of step b) to cover the pine nuts and/or comminuted pine nuts,
d) cooling the chocolate of step c) to form a first compartment,
e) adding on the top of said first compartment at least one sugar containing preparation.

The at least one sugar containing preparation may comprise any type of sugar which is typically used in sweet and/or chocolate products.

According to another preferred embodiment, the at least one sugar containing preparation comprises nougat, brittle and/or fruits, preferably jam or fruit puree.

According to another preferred embodiment, the sugar substitute is provided in a solution or in a solid form.

The present invention is further illustrated by the following examples, however, without being restricted thereto.

EXAMPLES

***Example 1:* Influence *of sugar concentration,* pine nut *size, and storage time* on pine nut *surface area***

Four chocolate preparations comprising chocolate (20 wt% cocoa butter and 80 wt% cocoa powder) with four different sucrose concentrations (0, 2, 10, and 40 wt% sucrose on the total composition was added to the chocolate) were prepared. The chocolate preparations were melted at 50°C and the melted chocolate was used to coat pine nuts (*Pinus pinea*) having a size of approximately 6 to 7 mm and cut pine nuts having a size of 0.5 mm and less (using sieve with mesh 0.5 mm), 1 mm (sieves with mesh 0.9 mm and 1.1 mm), 2 mm (sieves with mesh 1.9 mm and 2.1 mm) and 4 mm (sieve with mesh 4 mm). For practical reasons, the coated samples with cut pine nuts comprised up to 10 pine nut fragments. In Table 1 the different samples are summarized.

Table 1: Overview of used pine nut sizes and sucrose concentrations.

| Condition | Pine nuts size (mm) | Sucrose concentration (wt %) |
|---|---|---|
| A | 0.5 | 0 |
| B | 1 | |
| C | 2 | |
| D | 4 | |
| E | 0.5 | 2 |
| F | 1 | |
| G | 2 | |
| H | 4 | |
| I | 0.5 | 10 |
| J | 1 | |
| K | 2 | |
| L | 4 | |
| M | 0.5 | 40 |
| N | 1 | |
| O | 2 | |
| P | 4 | |

The surface area of all chocolate coated pine nuts was measured immediately after coating. Thereafter, the coated pine nuts were inserted into test tubes, sealed, and stored at a temperature 20 - 23 °C in an area free of odors and infestation for 2 weeks, 4 weeks, and three months. In order to quantify the influence of the sucrose content and storage time on pine nut quality, the surface area of the coated pine nuts was evaluated and their change (%) in surface area was monitored, whereby the surface area was determined as follows:

To determine the surface area of the coated pine nuts, three linear dimensions of nut as length (L), width (W), thickness (T) are measured with a caliper and surface area (S) is calculated by using the Equation (1) given in Milosevic T. et al (Acta Sci. Pol. Hortorum Cultus. 2017; 16(5): 49-61)):

$$S = \pi D_g^2 \ (1)$$

where, the geometric mean diameter ($D_g$) is defined in Equation (2) :

$$D_g = \sqrt[3]{LWT} \ (2)$$

The results (see Table 2) show that the surface areas of coated pine nut fragments having a size of 0.5 mm and 1 mm did not significantly change after four weeks of storage (see conditions A and B as well as E and F) at sucrose concentrations of 0 and 2 wt% However, the surface areas of pine nuts and pine nut fragments having a size of 2 and 4 mm are influenced by the presence of sucrose in the chocolate coating. Higher sucrose concentrations (10 wt % and 40 wt%) resulted in a significant increase of the surface area of pine nuts and pine nut fragments having a size of 2 and 4 mm indicating a "swelling effect" of pine nuts due to the presence of defined amounts of sucrose. Pine nuts samples having the size of 0.5 mm exhibited no significant change in surface area in all storage conditions (see conditions A, E, I, and M). These results show that pine nut fragments having a size of less than 1 mm are not substantially influenced by the presence of sucrose in the chocolate coating. In addition, the surface area increased with extended storage time, showing the limited storage stability of pine nuts having a size of at least 1 mm in sucrose-containing matrices.

Table 2: Results of the surface area analysis of pine nuts stored under different conditions for 2 weeks, 4 weeks and three months (n=10 $\pm$ standard deviation; SD).

| Condition | Change of surface area (% $\pm$ SD) | | |
| --- | --- | --- | --- |
| | 2 weeks | 4 weeks | 3 months |
| A | 7.9 $\pm$ 3.2 | 8.6 $\pm$ 4.5 | 10.2 $\pm$ 6.0 |
| B | 6.2 $\pm$ 4.9 | 9.1 $\pm$ 3.9 | 9.8 $\pm$ 2.9 |
| C | 8.1 $\pm$ 3.5 | 8.9 $\pm$ 4.6 | 10.9 $\pm$ 4.3 |
| D | 7.9 $\pm$ 3.9 | 8.2 $\pm$ 4.8 | 10.2 $\pm$ 2.7 |
| E | 8.2 $\pm$ 4.0 | 9.8 $\pm$ 3.6 | 10.7 $\pm$ 3.9 |
| F | 6.4 $\pm$ 5.5 | 8.4 $\pm$ 4.7 | 14.9 $\pm$ 3.0 |
| G | 9.8 $\pm$ 3.1 | 10.9 $\pm$ 3.6 | 15.7 $\pm$ 2.3 |
| H | 6.1 $\pm$ 3.9 | 8.4 $\pm$ 4.7 | 16.4 $\pm$ 5.8 |
| I | 9.1 $\pm$ 3.9 | 9.9 $\pm$ 2.8 | 10.7 $\pm$ 4.1 |
| J | 8.8 $\pm$ 3.6 | 18.2 $\pm$ 3.2 | 28.4 $\pm$ 2.4 |
| K | 9.6 $\pm$ 3.9 | 26.1 $\pm$ 3.0 | 32.1 $\pm$ 2.8 |
| L | 10.1 $\pm$ 5.6 | 27.4 $\pm$ 3.3 | 33.4 $\pm$ 2.3 |
| M | 7.1 $\pm$ 4.4 | 10.2 $\pm$ 4.7 | 10.5 $\pm$ 5.2 |
| N | 8.2 $\pm$ 5.0 | 22.9 $\pm$ 4.7 | 31 $\pm$ 4.9 |
| O | 10.4 $\pm$ 4.6 | 28.7 $\pm$ 4.7 | 36 $\pm$ 5.1 |
| P | 8.8 $\pm$ 5.9 | 29.1 $\pm$ 2.9 | 33 $\pm$ 4.0 |

*Example 2: Influence of sugar content and storage time on pine nut bitterness*

Aqueous solutions of four sucrose concentrations (0, 2, 10, and 40 wt%) were prepared in 1 liter each. 200 g Pine nuts (*Pinus pinea*) were added to each concentration and stored at a temperature 20 - 23 °C in an area free of odors and infestation for 2 weeks, 4 weeks, and three months. Pine nuts samples (50 g) of each sugar concentration were collected for analysis at respective time points.

Before testing, pine nuts were carefully rinsed with water for 60 seconds to remove the sugar from the pine nuts. The bitterness of the pine nuts was tested using a simple descriptive test according to DIN 10964. This standard specifies a procedure for the verbal description of characteristics of one or more test specimens. The procedure is applicable for determining factors influencing production and for the characterization of product standards.

Each test person was provided with a test form containing descriptive terms for bitterness. The pine nuts were blindly and randomly presented to 10 subjects (non-smokers) between 25 and 55 years of age blindly and randomly presented for tasting. The bitterness of the pine nuts had to be rated on a scale of 0 to 5, where 0 represented "not bitter" and 5 "very bitter". In order to quantify the influence of sugar content and storage time on pine nut quality, the bitterness of pine nuts was evaluated sensory after being stored under the conditions I to XII, as shown in Table 3.

Table 3: Summary of storage conditions for the evaluation of the of pine nut bitterness.

| Condition | Storage time | Sucrose concentration (wt%) |
|-----------|--------------|------------------------------|
| I | 2 weeks | 0 |
| II | 4 weeks | |
| III | 3 months | |
| IV | 2 weeks | 2 |
| V | 4 weeks | |
| VI | 3 months | |
| VII | 2 weeks | 10 |
| VIII | 4 weeks | |
| IX | 3 months | |
| X | 2 weeks | 40 |
| XI | 4 weeks | |
| XII | 3 months | |

In this experiment, participants each tasted 12 different samples with a minimum of 60 s (controlled by timed delays enforced via software) between sample sets, and participants were instructed to rinse with water between each sample. Additionally, all participants were informed of the large number of samples to be tasted and instructed to only taste 1 spoonful (approximately 4 g) of each.

Table 4: Sensory evaluation (0 - 5) of the bitterness of the conditions (I to XII) from the individual test persons (P1 to P10), mean values.

| Condition | Mean bitterness |
|-----------|-----------------|
| I | 0 |
| II | 0 |
| III | 0 |
| IV | 0.2 |
| V | 0.5 |
| VI | 0.7 |
| VII | 2.1 |
| VIII | 3.2 |

(continued)

| Condition | Mean bitterness |
|---|---|
| IX | 4.5 |
| X | 3.1 |
| XI | 4.8 |
| XII | 4.9 |

As shown in Table 4, the bitterness of pine nuts after storage in 0 wt % and 8 wt % sugar solutions for 2 weeks, 4 weeks, and three months (Conditions I - III) was rated by all 10 subjects with 0, i.e., the lowest level of bitterness (scale 0 to 5). Conditions VII - XII, which all were characterized by sugar concentrations of 10 wt % and 40 wt %, were perceived as significantly more bitter than compositions IV to VI.

***Example 3: Influence of pine nut size and sugar concentration on surface color.***

Aqueous solutions of four sucrose concentrations (0, 2, 20, and 40 wt%) were prepared in an amount of 1 liter each. Cleaned and washed pine nuts were cut into pieces by using a knife to achieve medium pine nut sizes of 0.5 mm, 1 mm, 2 mm, and 4 mm. Samples (50g) of each pine nut size were added to respective sugar concentrations and stored securely for four weeks at a temperature 20 - 23 °C, and at max. 70 % humidity in an area free of odors and infestation.
To measure the decoloration, pine nuts were collected, rinsed with water for 60 seconds, dried at room temperature for one hour, and the lightness value L* was measured as an indicator of the surface color using a Minolta Chroma Meter (CR-200 reflectance colorimeter, Minolta, Japan). The instrument is a tristimulus colorimeter that measures color indices specified by the Commission International de l'Esclairage (CIE). The lightness value L* ranges from 0 to 100, whereas black is defined at 0 and white at 100.
The lightness value of each sample was measured directly before adding the pine nuts to the aqueous solution as control values. From a sample of 10 pine nuts of each condition, the parameter of lightness values (sample and control,), were determined. The samples are summarized in Table 1. The change in color was calculated as difference (%) between the lightness values of the samples stored at respective conditions and the lightness values of the control.
The results indicated that pine nuts tend to get darker as the sugar content and the medium pine nut size increase. Smaller pine nut pieces with a size of 0.5 mm showed only slight differences in surface color with increasing concentrations compared to control. In addition, pine nuts stored in 2 wt % sucrose solution showed very low decoloration among all sizes, wherein a size-dependent correlation at higher sucrose concentrations (10 wt % and 40 wt %) was observed (see Table 5).

Table 5: Color difference of Luminosity (L*) of pine nuts stored under different conditions.

| Condition | Color difference (% relative to control) |
|---|---|
| A | 0.1 |
| B | 0.2 |
| C | 0.1 |
| D | -0.2 |
| E | -0.4 |
| F | -0.7 |
| G | -0.6 |
| H | -0.9 |
| I | -1.8 |
| J | -2.9 |
| K | -3.4 |
| L | -4.0 |
| M | -1.7 |

(continued)

| Condition | Color difference (% relative to control) |
|---|---|
| N | -4.2 |
| O | -4.8 |
| P | -5.2 |

**Claims**

1. A storage stable chocolate product comprising chocolate with no added sucrose and pine nuts and/or comminuted pine nuts, wherein the pine nuts and/or comminuted pine nuts have a size of at least 1 mm.

2. The chocolate product of claim 1, wherein the chocolate product comprises 5 to 80 wt %, preferably 5 to 70 wt%, more preferably 5 to 60 wt%, more preferably 5 to 50 wt%, pine nuts and/or comminuted pine nuts.

3. The chocolate product of claims 1 or 2, wherein the pine nuts and/or comminuted pine nuts have a medium size of at least 1.5 mm, preferably of at least 2 mm, more preferably of at least 2.5 mm, even more preferably of at least 3 mm.

4. The chocolate product of any one of claims 1 to 3,
   wherein comminuted pine nuts are crushed pine nuts, grinded pine nuts, cut pine nuts or combinations thereof.

5. The chocolate product of any one of claims 1 to 4,
   wherein the chocolate comprises at least one sugar substitute, preferably 5 to 60 wt %, more preferably 10 to 50 wt%, of at least one sugar substitute.

6. The chocolate product of claim 5, wherein the sugar substitute is a sugar alcohol.

7. The chocolate product of claim 6, wherein the sugar alcohol is selected from the group consisting of maltitol, xylitol, sorbitol, mannitol, arabitol, erythritol and combinations thereof.

8. The chocolate product of any one of claims 1 to 7,
   wherein the product comprises at least one further ingredient, preferably selected from the group consisting of nuts, preferably cashew nuts, hazel nuts, brazil nuts, macadamia nuts or walnuts, peanuts, almonds, coconut pieces and combinations thereof.

9. The chocolate product of any one of claims 1 to 8,
   wherein the chocolate product is a praline, a bar, a chocolate drop or a chocolate figure.

10. The chocolate product of claim 9, wherein the praline comprises at least one first compartment and at least one second compartment separated by the chocolate, wherein at least one first compartment comprises pine nuts and/or comminuted pine nuts.

11. The chocolate product of claim 10, wherein at least one second compartment of the praline comprises a composition comprising at least one sugar containing preparation.

12. The chocolate product of claim 11, wherein the at least one sugar containing preparation comprises nougat, brittle and/or fruits, preferably jam or fruit puree.

13. A method for manufacturing a chocolate product comprising the step of contacting a heated chocolate as defined in any one of claims 1 to 7 with pine nuts and/or comminuted pine nuts as defined in any one of claims 1 to 4.

14. The method of claim 13, further comprising the steps of:

    a) providing a hollow chocolate body comprising chocolate as defined in any one of claims 1 to 7, said body comprising a base and at least one side wall,

b) partially filling pine nuts and/or comminuted pine nuts as defined in any one of claims 1 to 4 into said hollow body,
c) introducing heated chocolate into the body of step b) to cover the pine nuts and/or comminuted pine nuts,
d) cooling the chocolate of step c) to form a first compartment,
e) adding on the top of said first compartment at least one sugar containing preparation.

15. The method of claim 14, wherein the at least one sugar containing preparation comprises nougat, brittle and/or fruits, preferably jam or fruit puree.

Europäisches
Patentamt
European
Patent Office
Office européen
des brevets

# EUROPEAN SEARCH REPORT

Application Number

EP 22 18 1655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/280357 A1 (COY JOHANNES [DE]) 24 October 2013 (2013-10-24) * paragraph [0044] * * paragraph [0077] * * paragraph [0078] * ----- | 1-15 | INV. A23G1/48 A23G1/54 |
| X | WO 2016/097189 A1 (CAVALIER [BE]) 23 June 2016 (2016-06-23) * claim 1 * * claim 3 * * claim 6 * * claim 15 * ----- | 1-15 | |

TECHNICAL FIELDS
SEARCHED      (IPC)

A23G

The present search report has been drawn up for all claims

| Place of search | Date of completion of the search | Examiner |
|---|---|---|
| The Hague | 5 December 2022 | Alonso Martínez, D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 1655

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2022

| Patent document cited in search report | | Publication date | Patent family member(s) | | Publication date |
|---|---|---|---|---|---|
| US 2013280357 | A1 | 24-10-2013 | BR 112013017370 | A2 | 17-10-2017 |
| | | | CL 2013001989 | A1 | 07-02-2014 |
| | | | CN 103491796 | A | 01-01-2014 |
| | | | CO 6761363 | A2 | 30-09-2013 |
| | | | DE 102011008016 | A1 | 12-07-2012 |
| | | | EA 201300672 | A1 | 30-12-2013 |
| | | | EP 2590514 | A1 | 15-05-2013 |
| | | | ES 2517465 | T3 | 03-11-2014 |
| | | | PE 20140499 | A1 | 15-05-2014 |
| | | | PL 2590514 | T3 | 27-02-2015 |
| | | | SG 191405 | A1 | 30-08-2013 |
| | | | UA 91011 | U | 25-06-2014 |
| | | | US 2013280357 | A1 | 24-10-2013 |
| | | | WO 2012092916 | A1 | 12-07-2012 |
| | | | ZA 201304348 | B | 26-02-2014 |
| WO 2016097189 | A1 | 23-06-2016 | BE 1025081 | A1 | 16-10-2018 |
| | | | EP 3232803 | A1 | 25-10-2017 |
| | | | US 2018007927 | A1 | 11-01-2018 |
| | | | WO 2016097189 | A1 | 23-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2198532 C2

- KR 101178547 B1

**Non-patent literature cited in the description**

- **MILOŠEVIĆ T. et al.** *Acta Sci. Pol. Hortorum Cultus.,* 2017, vol. 16 (5), 49-61